Europäisches Patentamt

European Patent Office

Office européen des brevets

(19)

(11) Numéro de publication: **0 267 097**
**B1**

(12) **FASCICULE DE BREVET EUROPEEN**

(45) Date de publication du fascicule du brevet:
**13.12.89**

(51) Int. Cl.⁴: **F01D 5/02,** F01D 7/00
// F01D5/30

(21) Numéro de dépôt: **87402353.4**

(22) Date de dépôt: **21.10.87**

(54) **Anneau porte-pales pour aubage d'hélice de grande dimension.**

(30) Priorité: **22.10.86 FR 8614631**

(43) Date de publication de la demande:
**11.05.88 Bulletin 88/19**

(45) Mention de la délivrance du brevet:
**13.12.89 Bulletin 89/50**

(84) Etats contractants désignés:
**DE FR GB**

(56) Documents cités:
**EP-A- 0 017 567**
**FR-A- 1 575 682**
**FR-A- 2 347 858**
**GB-A- 1 090 721**
**GB-A- 2 041 459**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Bouiller, Jean georges, 10, rue Klébar, F-91800 Brunoy(FR)**
Inventeur: **Payen, Jean-Michel, 116, Square A.Rodin, F-77350 Le Mee Sur Seine(FR)**
Inventeur: **Ruis, Jean-Pierre 431, allée Marquise de Sévigné, Domaine du chateau des Dames, F-77820 Le Chatelet en Brie(FR)**

(74) Mandataire: **Moinat, François et al, S.N.E.C.M.A. Service des Brevets Boîte Postale 81, F-91003 Evry Cédex(FR)**

**Description**

L'invention concerne un anneau porte-pales pour aubage d'hélice de grande dimension, ledit anneau étant entraîné par la turbine et présentant à sa périphérie des alésages radiaux dans lesquels sont maintenus les pieds de pales.

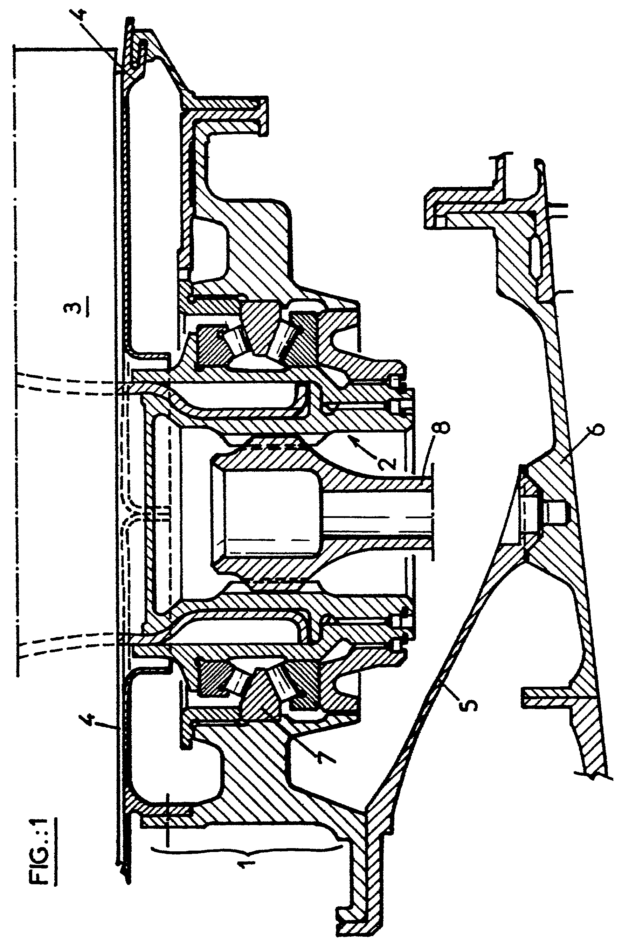

On connaît des anneaux porte-pales en titane, tels que celui représenté figure 1. Un tel anneau est constitué d'une pièce cylindrique portant des alésages radiaux dans lesquels viennent se fixer, par l'intermédiaire de paliers de butée, les pieds des pales. L'anneau est fixé sur un arbre de turbine par des pattes élastiques et porte à sa périphérie un capotage. Le pied de pale porte des moyens susceptibles de coopérer avec un arbre de commande de pas.

Ces anneaux métalliques, monoblocs, constituent avec leurs pattes de fixation, un disque de masse relativement importante devant, en outre, résister aux sollicitations centrifuges.

L'utilisation d'anneaux en matériaux de faible masse spécifique, comme les matériaux composites, n'a pu jusqu'à présent aboutir par suite des forces centrifuges importantes qui s'exercent sur le matériau par l'intermédiaire des pales de grande dimension et de l'impossibilité de compenser les efforts localisés prenant naissance lors d'une éventuelle rupture de pale.

L'invention a pour objet un anneau en matériau composite dans lequel sont maintenus des inserts métalliques servant à la fois à la fixation des pieds de pales et à la compensation des efforts s'exerçant sur l'anneau.

L'anneau porte-pales, selon l'invention, est remarquable en ce qu'il est constitué :
- d'une structure annulaire en composite dans laquelle sont prévus les alésages radiaux;
- d'inserts métalliques au moins partiellement logés dans les alésages, lesdits inserts portant au moins une partie des éléments d'un dispositif de rétention des pieds de pales;
- d'au moins une ceinture de fixation périphérique maintenant les inserts dans les alésages.

Les explications et figures, données ci-après à titre d'exemple, permettront de comprendre comment l'invention peut être réalisée.

La figure 1 est une demi-vue en coupe axiale d'un anneau porte-pales selon l'art antérieur.

La figure 2 est une demi-vue en coupe axiale d'un exemple de réalisation d'un anneau porte-pales selon l'invention.

La figure 3 est une vue selon III III de la figure 2.

La figure 4 est une vue en coupe selon IV IV de la figure 2.

La figure 5 représente schématiquement un bobinage polygonal des fibres maintenant les inserts.

La figure 6 représente schématiquement un bobinage polygonal croisé des fibres maintenant les inserts.

La figure 7 est une vue éclatée d'une partie d'anneau porte-pales selon un deuxième exemple de réalisation.

Les figures 8A et 8B sont des vues selon VIII A, VIII B de l'exemple de réalisation de la figure 7, les différents éléments étant assemblés.

La figure 9 est une vue en coupe axiale d'un troisième exemple de réalisation d'un anneau porte-pales.

La figure 10 est une vue selon X X de la figure 9.

Les figures 11 à 16 montrent les différentes phases du montage du dispositif de fixation des pieds de pales dans les inserts.

La figure 1 représente un anneau porte-pales, selon la technique antérieure. Cet anneau 1 est formé d'une structure annulaire métallique portant, uniformément répartis à sa périphérie, des alésages dans lesquels sont fixés les pieds 2 des pales 3. L'anneau est en titane. Le capotage 4 du moyeu d'hélice est fixé aux faces radiales de la structure annulaire et recouvre extérieurement celle-ci.

Des pattes élastiques 5 relient la surface intérieure de l'anneau 1 à la structure de turbine. Le pied de pale 2 est directement fixé dans l'alésage par un dispositif comportant un palier à butées 7 et permettant l'orientation de la pale par un accouplement à cannelures avec un arbre de commande de pas 8.

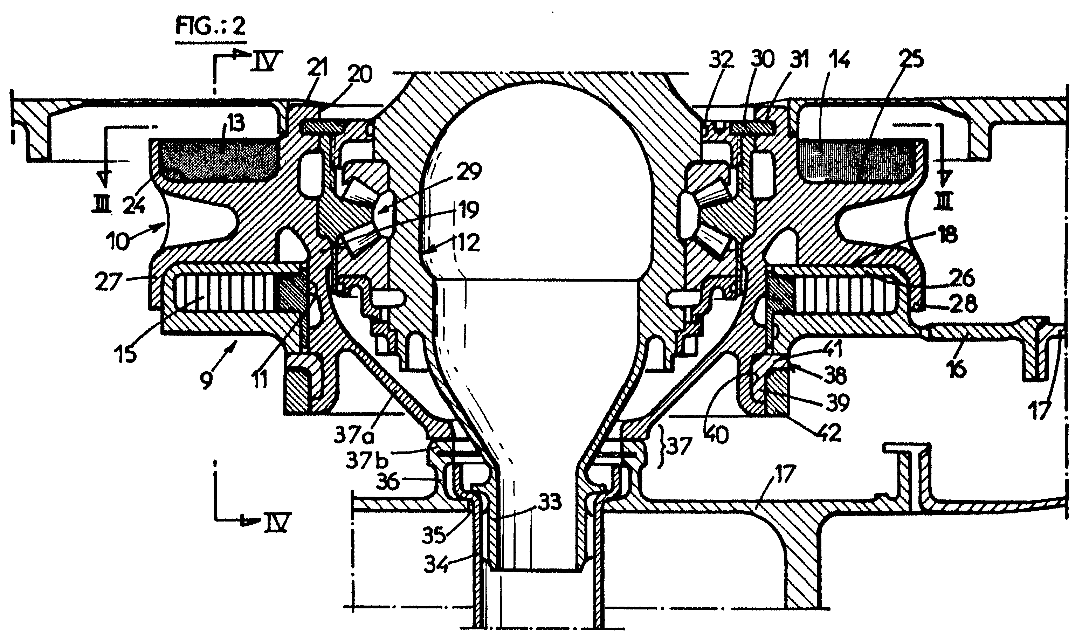

L'invention, telle que représentée dans les figures 2 et suivantes est remarquable en ce que la structure annulaire 9 est en matériau composite et comporte des inserts métalliques 10, au moins partiellement logés dans les alésages radiaux 11. Lesdits inserts, portant au moins une partie des éléments d'un dispositif de rétention des pieds 12 de pales, sont fixés sur la structure par des moyens de fixation comportant au moins un bobinage 13, 14 approximativement périphérique de fils formés de fibres synthétiques.

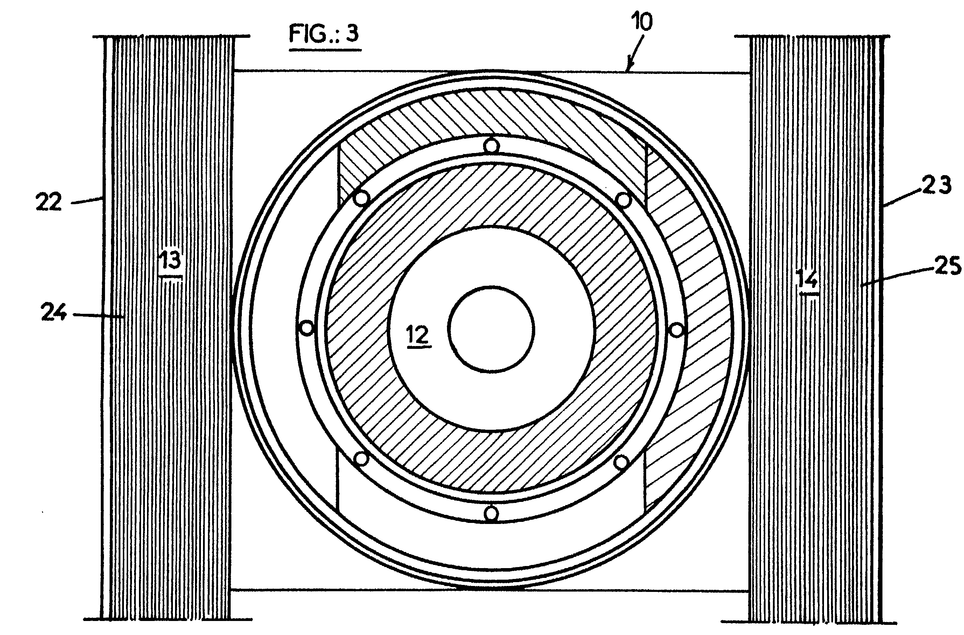

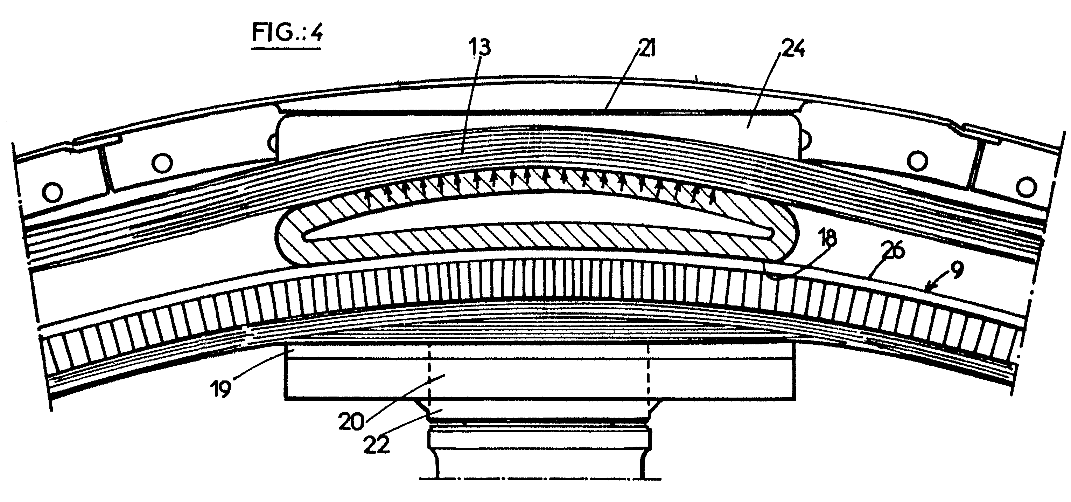

Les inserts métalliques 10 ont, vus en plan (figure 3) une forme approximativement rectangulaire. La face dirigée vers l'axe de turbine (figure 4) qui sera dénommée "face intérieure" (la "face extérieure" étant dirigée vers l'extérieur de la turbine) présente un rayon de courbure identique à celui de la face extérieure de la structure annulaire 9 avec laquelle elle coopère.

La figure 2 est une coupe axiale d'un anneau porte-pales passant par l'axe d'un insert métallique 10. L'insert 10 est logé dans un alésage radial 11 de la structure annulaire 9. Selon l'exemple de réalisation représenté, la structure annulaire est constituée d'une âme 15 en un matériau cellulaire, par exemple, un nid d'abeilles métallique, présentant des cellules d'axes approximativement radiaux, entouré d'une peau en un matériau composite formé, par exemple, de fibres de carbone imprégnées d'une résine synthétique.

Les alésages 11 sont percés dans le plan radial de symétrie de l'anneau et sont renforcés par une bague en un matériau synthétique ou métallique.

Selon un autre mode de réalisation de la structure annulaire, celle-ci se présente comme formée de trois anneaux accolés, les premier et dernier anneaux présentant une âme en matériau cellulaire, l'anneau central, portant les alésages, étant en un matériau composite massif.

La structure annulaire est fixée par un prolongement 16 d'une de ses faces cylindriques au rotor métallique 17 de la turbine d'entraînement.

Dans cet exemple de réalisation, les inserts métalliques 10, sont, comme montrés figures 3 et 4, de forme rectangulaire et présentent sur leur face intérieure 18 et selon l'axe de symétrie vertical, un canon 19, dont l'alésage coaxial 20 débouche sur la face opposée extérieure 21. Le canon 19 se loge dans un des alésages radiaux 11 prévus dans la structure annulaire. Le bord annulaire du canon est pourvu de pattes 37a dont le rôle sera ultérieurement précisé.

L'insert métallique 10 porte, près de ses bords radiaux parallèles 22 et 23, sur la face extérieure 21, des rainures à fond convexe 24 et 25 dans lesquelles passe une ceinture de fixation formée par des bobinages 13, 14. Les bobinages maintiennent la face intérieure 18 de l'insert contre la face extérieure convexe 26 de la structure annulaire 9. La face 18 de l'insert porte sur ses bords radiaux, des rebords 27, 28 qui se placent contre les bords radiaux de la structure annulaire 9 lorsque le canon 19 est en place dans l'alésage de ladite structure.

Les rebords radiaux 27, 28 de l'insert constituent avec les bords radiaux de la structure annulaire un dispositif de positionnement de l'insert dont d'autres formes de réalisation seront ultérieurement décrites et montrées dans des variantes de l'invention.

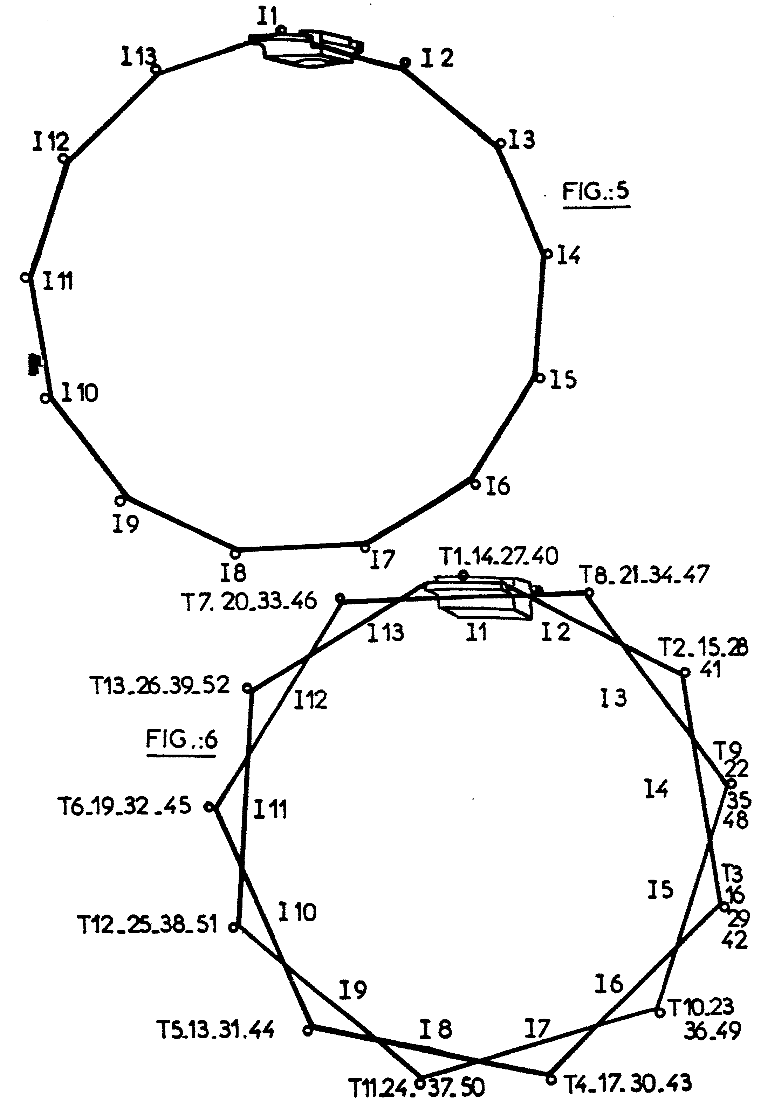

Dans l'exemple de réalisation des figures 2 à 4, les bobinages passent successivement dans chaque rainure amont 24 ou aval 25 des inserts et forment, selon l'exemple de la figure 5, un polygone.

Le bobinage peut être réalisé avant ou après la mise en place des pales et plus particulièrement des pieds 12 dans les inserts 10.

Les canons 19 des inserts 10 présentent dans leur alésage 20 des moyens de rétention 29 des pieds de pales constitués d'un chambrage dans lequel se loge un palier de butées monté sur le pied de pale interdisant les mouvements centripètes, et d'une gorge 31, prévue au voisinage du bord extérieur de l'alésage 20, recevant des segments annulaires 30 qui maintiennent le palier de butées dans le chambrage contre les mouvements centrifuges. Les segments sont maintenus en position par une vis creuse 32.

L'extrémité tubulaire 33 du pied de pale, dirigée vers le centre, coopère par une transmission à cannelures avec un arbre de commande du pas 34 disposé radialement par rapport à l'arbre de turbine 17 et qui traverse celui-ci par une ouverture 35.

Selon la forme de réalisation représentée, l'ouverture 35 porte un bossage annulaire formant un collet 36 faisant saillie de la surface extérieure de l'arbre de turbine en alignement avec l'extrémité de pattes 37a de l'insert. Le bord 37b du collet et l'extrémité des pattes sont séparés par un faible espace et constituent un limiteur d'amplitude 37. Ce limiteur a pour but de répartir les contraintes sur l'ensemble de l'anneau en cas de rupture d'une pale. En effet lors d'un tel incident, la structure annulaire, soulagée, se rétracte et vient, par l'intermédiaire du limiteur, s'asseoir sur l'arbre métallique qui renvoie par réaction l'effort, transitant par l'insert, sur les fibres des bobinages, qui de ce fait travaillent toujours dans la même direction.

Les inserts 10 sont maintenus dans la structure annulaire, contre la force centrifuge, par un bobinage de fils de fibres de carbone unidirectionnelles, par exemple.

En cas de rupture de ces bobinages, il est prévu des moyens de rétention de l'insert constitués d'une bague d'arrêt placée sur l'extrémité du canon 19. Selon la forme de réalisation retenue, cette bague se présente sous forme d'une entretoise sectorisée 38 (figure 2) de section en L. La partie radiale 39 de l'entretoise est engagée dans une gorge 40 prévue sur la surface extérieure de l'extrémité libre annulaire du canon 19 de l'insert et la partie axiale 41 vient buter contre le bord de l'alésage prévu dans la structure annulaire 9. Une bague de maintien 42 est montée sur les parties radiales 39 de l'entretoise sectorisée et est fixée par un moyen connu sur l'extrémité du canon.

La figure 4 montre les formes respectives de la face intérieure 18 de l'insert et du fond convexe de la rainure 24 ou 25. Le rayon de courbure des rainures est inférieur au rayon de courbure de la face intérieure de l'insert (ou de la face extérieure de la structure) afin de permettre une meilleure répartition des pressions de contact sur l'insert et une transmission quasi unidirectionnelle des efforts dans les fibres, ces efforts étant dans les types de bobinage prévus, toujours des efforts de traction.

Selon la forme de réalisation représentée sur la figure 6 et dans laquelle le nombre d'inserts est impair, le bobinage est croisé. Le fil, constitué de fibres unidirectionnelles de carbone, passe dans les rainures 24 de la face extérieure d'un insert sur deux. Ainsi lors du premier tour de bobinage, le fil passant dans la rainure 24 de la face extérieure de l'insert I1 passera dans la rainure 24 de la face extérieure de l'insert I3 puis I5... Au deuxième tour, le fil arrivant dans la rainure 24 de l'insert I113 passera dans la rainure de l'insert I2, qui avait été négligé lors du premier tour, ainsi que sur les inserts I4, I6, I8 etc.

Le même mode de bobinage s'applique à la deuxième rainure 25 de la face extérieure des inserts.

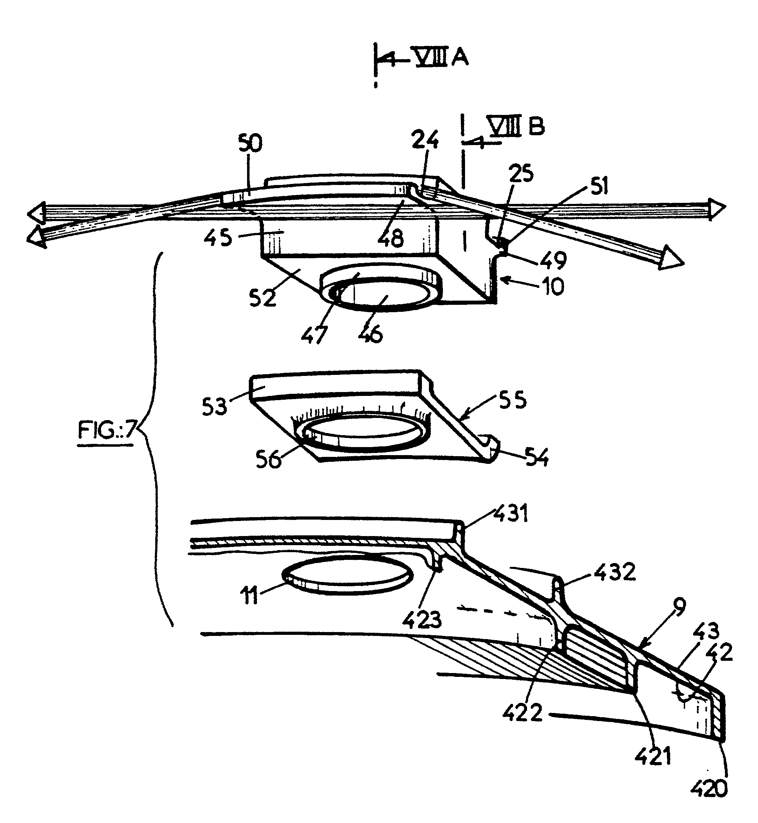

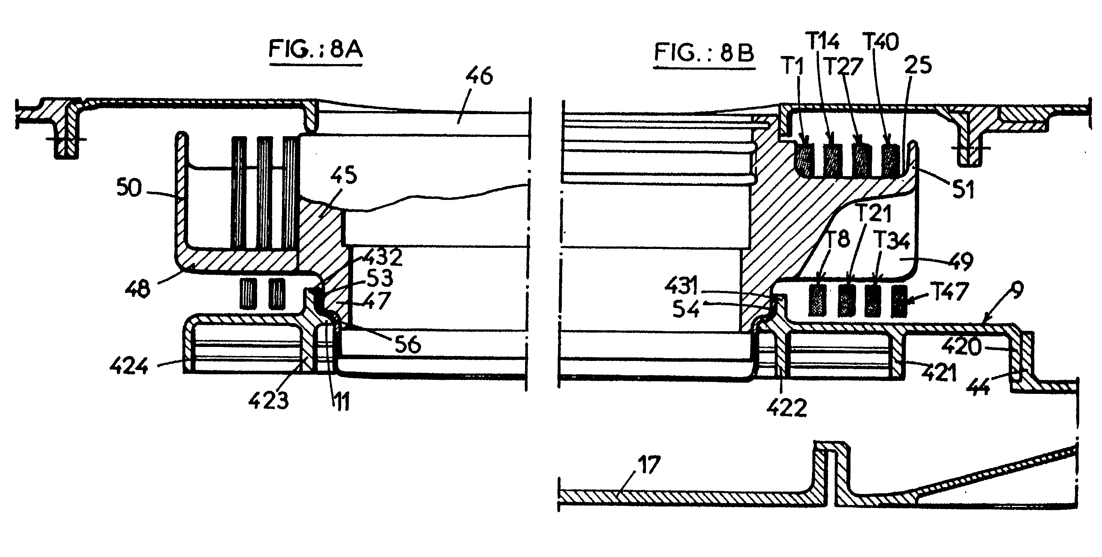

Les figures 7, 8A et 8B montrent le croisement des fils sur un insert, selon une nouvelle forme de réalisation d'un anneau porte-pales.

Dans la vue éclatée de la figure 7 et les vues en coupe 8A et 8B, la structure annulaire 9 en composite comporte sur ses faces intérieure et extérieure 42 et 43 des nervures radiales 420 à 424 et 431, 432.

La nervure d'extrémité aval 420 forme une bride qui coopère avec une bride correspondante 44 de l'arbre d'entraînement 14.

Les nervures intérieures 421, 422 et 423, 424 définissent des logements annulaires disposés de part et d'autre d'une zone annulaire centrale dans laquelle sont prévus les alésages 11.

Les logements annulaires maintiennent des structures en nid d'abeilles dont l'axe des alvéoles est disposé selon l'axe de l'anneau. La structure annulaire ainsi formée a pour fonction la reprise des moments induits par les forces centrifuges, aérodynamiques et dynamiques.

Les nervures radiales extérieures 431 et 432 de la face extérieure de la structure, disposées de part et d'autre des alésages 11 ont pour fonction de maintenir en position les inserts 10. Selon la forme de réalisation représentée, ces inserts ont un corps parallélépipédique 45, traversé axialement par un alésage 46 et présentant sur leur face intérieure, coaxiale à l'alésage, une protubérance annulaire ou canon 47.Sur deux des faces latérales opposées du corps 45, qui seront choisies comme faces radiales, sont prévues des ailes courbes 48, 49 s'étendant axialement. L'extrémité radiale des ailes portent deux rebords 50, 51 dirigés vers l'extérieur, formant avec les faces radiales du corps, des rainures recevant le bobinage.

La face intérieure plane 52 et le canon 47 qui constituent la partie intérieure de l'insert se logent entre les rebords radiaux 53, 54 d'une pièce intermédiaire 55 présentant selon son axe de symétrie perpendiculaire, un embrèvement 56 formant un bossage annulaire dirigé vers l'intérieur, susceptible de s'emboîter dans l'alésage 11. La face dirigée vers l'intérieur de l'anneau, de la pièce intermédiaire 55 présente une surface courbe de rayon de courbure sensiblement égal à celui de la face extérieure de la structure sur laquelle elle repose. Les rebords radiaux 53, 54 d'une part enserrent les faces radiales du corps de l'insert et d'autre part s'appuient contre les nervures radiales 431 et 432 de la structure, pour positionner l'insert, de manière que les rainures 24, 25 soient dans des plans radiaux.

Selon une forme de réalisation non représentée, la face intérieure de l'insert précédemment décrit, présente un rayon de courbure identique à celui de la structure annulaire de manière à coopérer avec cette dernière lorsqu'il est maintenu en place contre elle, comme décrit dans le premier exemple de réalisation, les faces latérales radiales de l'insert se plaçant contre et entre les nervures radiales 431, 432 de la structure annulaire.

La réalisation des bobinages constituant une partie des moyens de fixation des inserts est ci-après décrite.

Le premier tour du fil sur le premier insert I1 est numéroté T1 et se trouve placé contre le corps (figure 6 et 8B) dans la rainure extérieure 25, le deuxième tour passe au-dessous de la rainure 25 et est indiqué T8. On aura successivement les troisième, cinquième et septième tours repérés T14, 27, 40 dans la rainure 25 et les quatrième, sixième et huitième tours repérés T21, 34, 47 au-dessous de la même aile d'insert et de manière que les tours passant dans la rainure et ceux passant dessous soient alternés comme montré sur les figures 8A, 8B.

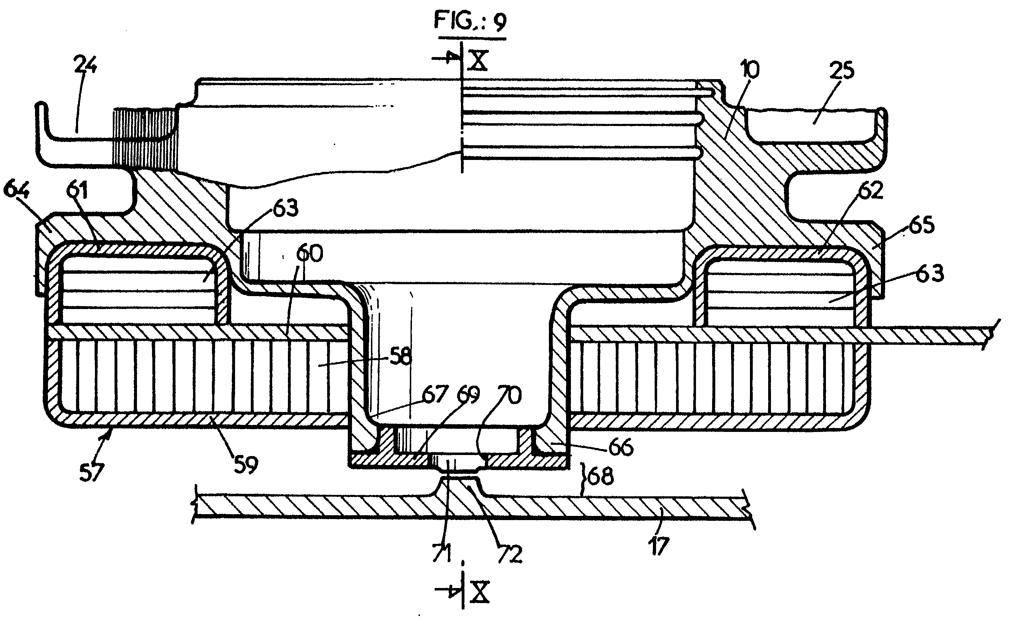

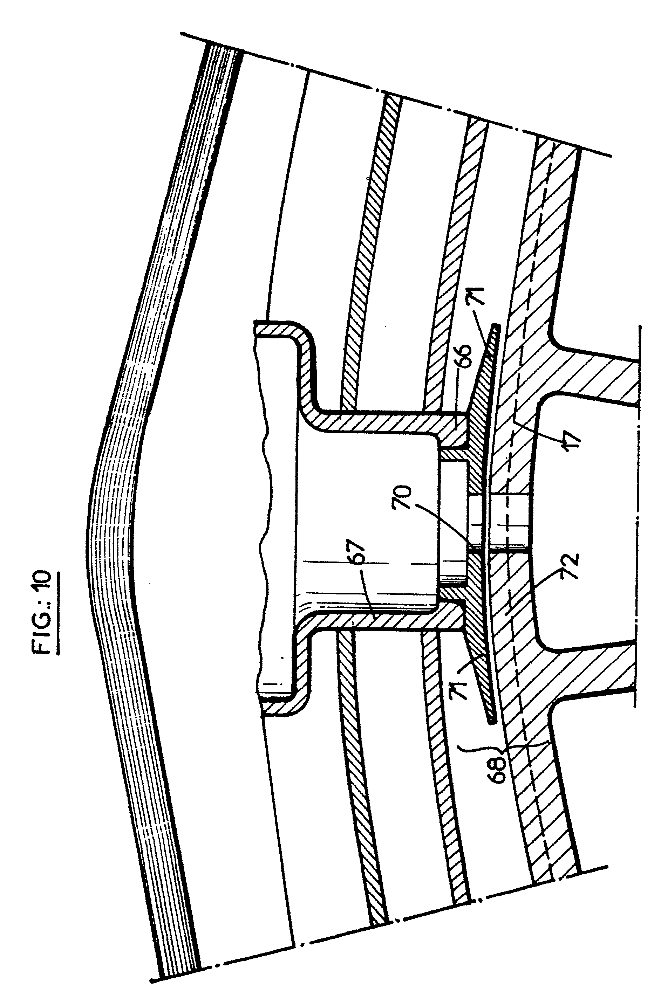

Selon une troisième forme de réalisation de la structure annulaire représentée figures 9 et 10, celle-ci est constituée d'un caisson cylindrique 57 comportant une structure en nid d'abeilles 58 à cellules à axes radiaux, maintenue entre deux viroles 59, 60 en matériau composite. Dans le caisson sont prévus les alésages radiaux recevant les inserts 10.

Le caisson est renforcé sur sa face extérieure par des anneaux 61, 62 de section en U dont l'âme est constituée d'une structure 63 en nid d'abeilles à cellules à axes longitudinaux parallèles à l'axe de l'anneau.

Les orientations croisées des cellules des nids d'abeilles ont pour but d'augmenter les rigidités axiale et radiale de la structure annulaire.

L'insert 10 est conformé approximativement comme celui de l'exemple de la figure 2 et comporte sur sa face intérieure des rebords radiaux 64, 65 venant se placer sur les faces radiales amont et aval des anneaux 61 et 62.

Selon une variante de réalisation, il est prévu un limiteur d'amplitude 68 formé par une partie du canon 19 de l'insert 10 et la surface extérieure de l'arbre de turbine 17.

Les figures 9 et 10, dans lesquels les moyens de maintien du pied de pale et le pied de pale ont été supprimés pour plus de clarté, montre un exemple de réalisation sensiblement différent du limiteur d'amplitude 37 de la figure 2.

L'extrémité 66 du canon 67 de l'insert 10 est muni d'un bouchon 69 portant un alésage central 70 pour le passage de l'arbre de commande de pas de la pale. Ce bouchon est muni diamétralement de deux languettes 71 s'étendant circonférentiellement, parallèlement à la surface extérieure de l'arbre de turbine 17. Dans le même plan radial de symétrie longitudinale des languettes, l'arbre de turbine 14 présente diamétralement à l'ouverture de passage de l'arbre de commande de pas au moins un bossage 72 contre lequel les languettes 71 sont susceptibles de s'appuyer. Ces bossages sont constitués par une nervure radiale dirigée vers l'extérieur de l'arbre de turbine.

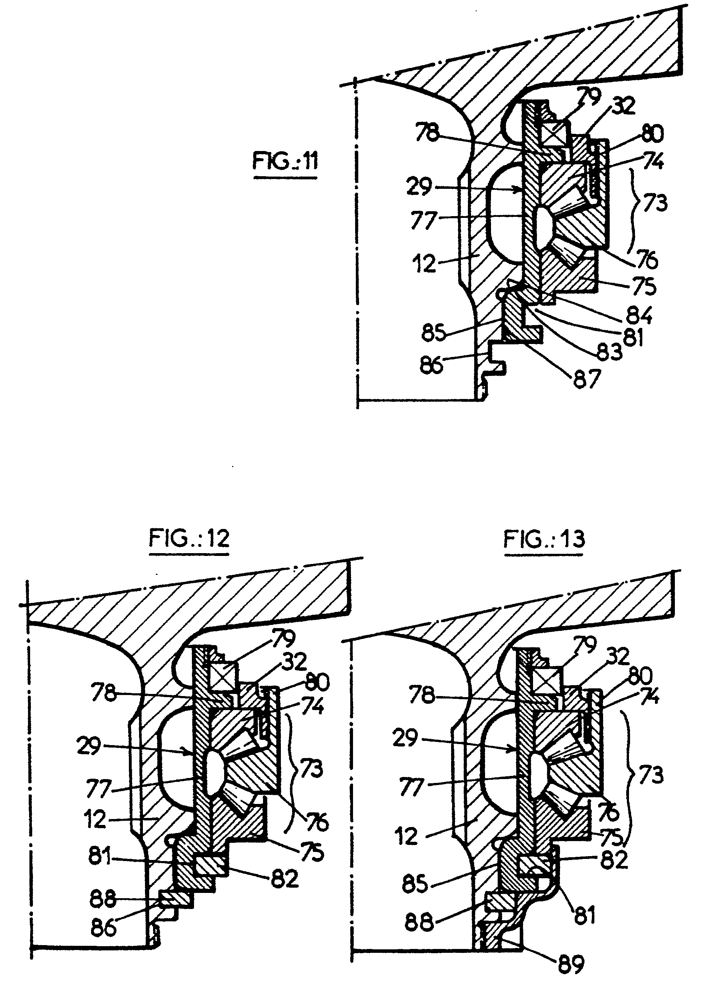

On va décrire ci-après, le montage d'une pale dans l'anneau porte-pales, en regard des figures 11 à 16, à l'aide d'un dispositif de rétention du pied de pale semblable à celui figuré de manière partiellement schématique dans la figure 2 et qui va être décrit ci-après.

Le dispositif de rétention 29 comporte, comme connu, un palier de butées 73 comportant deux bagues latérales 74 et 75 et une bague extérieure centrale 76. Les deux bagues latérales sont montées sur une douille intérieure 77 qui porte près d'une de ses extrémités(celle proche de la pale), un collet de butée 78 contre une face duquel est maintenu par un boulon, un joint d'étanchéité 79 susceptible d'assurer l'étanchéité entre la surface extérieure de la douille 77 et la face intérieure de la vis creuse 32 lorsque celle-ci est en position "haute".

Dans un montage classique, tel que celui montré figure 1, la bague extérieure centrale et la bague latérale 75, qui n'est pas en butée sur le collet, sont maintenues par des écrous généralement vissés respectivement dans le logement maintenant la bague centrale et sur le prolongement de la douille intérieure.

La fixation du pied de pale sur la structure annulaire par un élément fileté permet l'intervention sur une seule pale mais a pour inconvénient de faire travailler les filets de l'élément au cisaillement sous l'effet des forces centrifuges. Dans le cas de pales de grande dimension, comme celles équipant les soufflantes non carénées, les filets de l'élément fileté de pied de pale ne résistent pas aux forces centrifuges.

Afin de conserver les avantages de démontage présenté pour le système à filetage, le dispositif de rétention, selon un exemple de réalisation de l'invention, comporte un palier de butées dans lequel :
- la bague extérieure centrale 76 est solidaire d'un manchon 80 se prolongeant devant la bague latérale 74 et le collet 78, et présentant un filetage sur sa surface intérieure coopérant avec une vis creuse 32, dont le rôle sera ultérieurement précisé. Au stade de montage représenté, la vis est en position "basse", c'est-à-dire vissée à fond;
- la douille intérieure 77 porte sur sa surface extérieure et à son extrémité opposée à celle portant le collet, une rainure 81 dans laquelle vient se loger une bague d'arrêt sectorisée 82 maintenant la bague extérieure 75 de la butée à rouleaux coniques, comme montré sur la figure 12;
- sur sa surface intérieure, un épaulement

Le montage du pied de pale dans la structure annulaire s'opère comme suit, le palier à butées tel que précédemment décrit constituant un ensemble, dont seule manque la bague d'arrêt 82 dont les segments ne seraient pas maintenus.

Le pied de pale (figure 11), comportant vers son extrémité et à sa surface extérieure respectivement un collet 84, une portée cylindrique 85 et une gorge périphérique 86, est introduit dans la douille intérieure 77 du palier de butées, de manière à mettre en butée l'épaulement 83 de la douille 77 contre le collet 84. La portée 85 du pied de pale est alors en contact avec une portée correspondante 87 de la douille 77. Un bord de la gorge 86 est alors dans le même plan que l'extrémité de la douille 77, l'ouverture de la gorge étant complètement dégagée. On place dans les gorges 81 et 86 les bagues d'arrêt segmentées 82 et 88 que l'on maintient par un écrou chapeau 89 (figure 13).

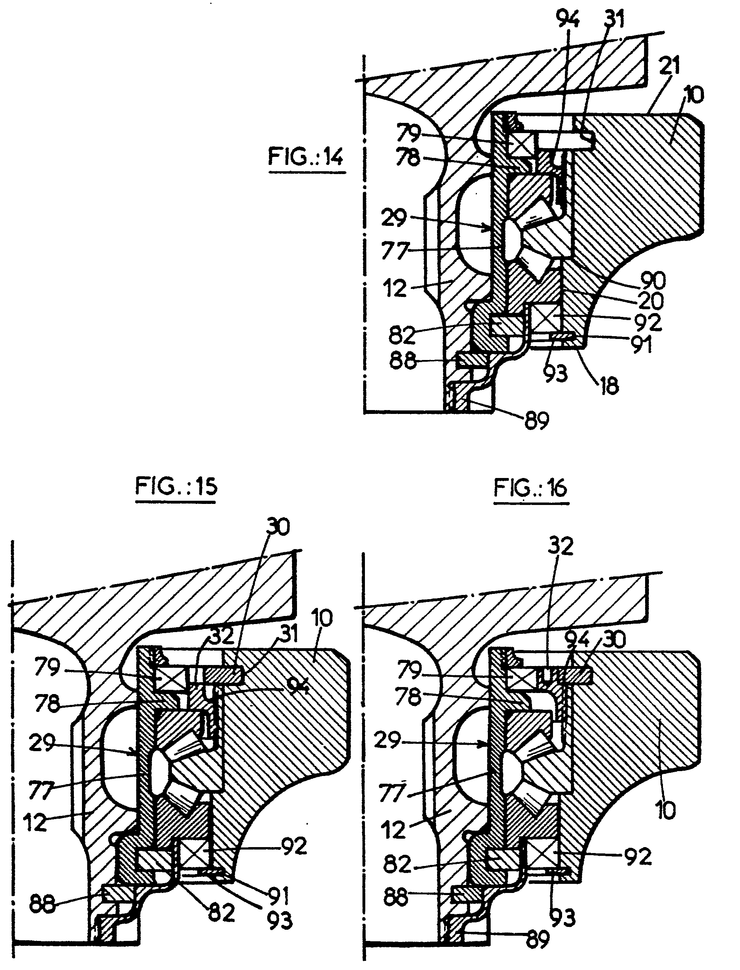

Le pied de pale muni du palier de butées est introduit (figure 14) dans l'alésage 20 de l'insert métallique 10 (représenté schématiquement), lui-même fixé sur la structure annulaire 9. La surface intérieure de l'alésage présente en allant de la face extérieure 21 à la face intérieure 18, une gorge 31 circonférentielle située près de la face extérieure, un épaulement 90 et une rainure 91 près de la face intérieure.

Le pied de pale est poussé radialement dans l'insert de manière que la bague extérieure centrale 76 vienne se loger contre l'épaulement 90 et par la même occasion, bloquer le joint d'étanchéité 92 contre la butée 93 placée dans la rainure 91. Les joints 79 et 92 assurent l'étanchéité du palier de butée, lorsque les différentes pièces constituant le dispositif de rétention sont en place.

Lorsque la bague extérieure centrale 76 est contre l'épaulement 90, la gorge 31 est complètement dégagée et l'on place les segments annulaires 30 dans le fond de la gorge (figure 15). On dévisse la vis creuse 32 (figure 16) pour l'amener en position "haute", position dans laquelle l'épaulement 94 prévu sur sa surface extérieure vient en butée sur le bord intérieur des segments annulaires 30 et la surface intérieure s'applique contre le joint d'étanchéité 79. La vis creuse est alors freinée par un moyen classique.

Les segments annulaires 30 et les bagues segmentées 82, 88 sont destinées à supporter les efforts de cisaillement dus au champ centrifuge des différents éléments.

L'anneau porte-pales décrit précédemment présente une grande sécurité d'emploi due au mode de fixation des inserts sur la structure par des bobinages périphériques de fibres et au dispositif limiteur d'amplitude qui permettent de répartir les efforts uniformément dans le bobinage et la structure.

En outre le dispositif de rétention permet des interventions rapides sur la seule pale intéressée tout en assurant une grande fiabilité d'emploi.

L'utilisation de matériau composite a permis, selon un exemple de réalisation, une réduction globale de masse de l'ordre de 30% par rapport à un anneau porte-pales en titane bien que la structure annulaire en composite ait sensiblement la même rigidité qu'un anneau classique.

**Revendications**

1. Anneau porte-pales pour aubage d'hélice de grande dimension, ledit anneau étant entraîné par la turbine et présentant à sa périphérie des alésages radiaux dans lesquels sont maintenus les pieds de pales, caractérisé en ce qu'il est constitué :
   - d'une structure annulaire (9) en composite dans laquelle sont prévus les alésages radiaux (11);
   - d'inserts métalliques (10), au moins partiellement logés dans les alésages (11), lesdits inserts portant au moins une partie des éléments d'un dispositif de rétention des pieds (12) de pales;
   - d'au moins une ceinture de fixation périphérique (13, 14), maintenant les inserts (10) dans les alésages (11).

2. Anneau selon la revendication 1, caractérisé en ce que les inserts métalliques (10) présentent, vus en plan, une forme rectangulaire, la face (18) de l'insert dirigée vers l'intérieur porte, selon son axe de symétrie verticale, un canon (19) dans lequel est prévu un alésage coaxial (20) débouchant sur la face (21) dirigée vers l'extérieur, le canon étant susceptible de se loger dans les alésages (11) de la structure annulaire (9), la face extérieure (21) porte près de ses bords radiaux parallèles (22, 23), des rainures à fond convexe (24, 25) dans lesquelles sont logés les moyens de fixation (13, 14) maintenant les inserts (10) contre la face extérieure convexe (26) de la structure annulaire (9).

3. Anneau selon la revendication 2, caractérisé en ce que la ceinture de fixation (13, 14) des inserts est formée par des bobinages périphériques de fils de fibres passant dans chacune des rainures à fond convexe (24, 25) des inserts.

4. Anneau selon la revendication 3, caractérisé en ce qu'un même fil d'un bobinage (13 ou 14) passe dans les rainures (24 ou 25) des inserts successifs (I1, I2, I3...).

5. Anneau selon la revendication 3, caractérisé en ce qu'un même fil d'un bobinage (13 ou 14) passe dans les rainures (24 ou 25) d'un insert sur deux (I1, I3, I5) les rainures des inserts négligés (I2, I4, I6...) lors du premier tour étant utilisées lors du deuxième tour.

6. Anneau selon la revendication 2, caractérisé en ce que la structure annulaire (9) est constituée d'un caisson cylindrique (57), formé de deux viroles (59, 60) en matériau composite maintenant une structure alvéolaire en nid d'abeilles (58) dans lequel sont prévus les alésages (11) recevant les inserts (10), ledit caisson présentant sur sa face extérieure des anneaux (61, 62) de section en U dont l'âme est constituée d'une structure alvéolaire en nid d'abeilles (63).

7. Anneau selon la revendication 6, caractérisé en ce que les axes des cellules des structures alvéolaires du caisson et des anneaux sont croisés afin d'augmenter la rigidité de la structure annulaire selon les axes desdites cellules.

8. Anneau selon la revendication 2, caractérisé en ce que la structure annulaire (9) est constituée d'une âme (15) en un matériau cellulaire, entouré d'une peau en un matériau composite, la partie portant les alésages étant éventuellement en un matériau composite massif.

9. Anneau selon la revendication 2, caractérisé en ce que les inserts métalliques (10) présentent sur leurs bords radiaux (22, 23), des rebords (27, 28) dirigés vers l'intérieur susceptibles de se placer contre les bords radiaux de la structure annulaire (9) pour former un dispositif de positionnement.

10. Anneau selon la revendication 2, caractérisé en ce que les canons (19) des inserts (10) comportent des moyens de rétention (29) de pied de pales constitués d'un chambrage dans lequel se loge un palier de butées monté sur le pied de pale et d'une gorge (31) prévue au voisinage du bord extérieur de l'alésage (20) recevant des segments annulaires (30), maintenant le palier de butées dans le chambrage, les segments étant bloqués en position par une vis creuse (32).

11. Anneau selon la revendication 2, caractérisé en ce que l'insert (10) comporte des moyens de rétention (38) d'insert constitués d'une entretoise sectorisée de section en L dont la partie radiale (39) coopère avec une gorge (40) prévue sur la surface extérieure de l'extrémité annulaire du canon (19) de l'insert et la partie axiale (41) vient buter contre le bord de l'alésage (11) prévu dans la structure annulaire (9), l'entretoise sectorisée étant maintenue par une bague de maintien (42).

12. Anneau selon la revendication 1, caractérisé en ce que la structure annulaire (9) comporte sur les faces intérieure et extérieure (42, 43) des nervures radiales intérieures (420,424) et extérieures (431, 432), une nervure intérieure d'extrémité aval (420) forme une bride coopérant avec une bride correspondante (44) de la turbine, les autres nervures intérieures (421, 422; 423, 424) forment des logements annulaires disposés de part et d'autre d'une zone annulaire centrale dans laquelle sont prévus les alésages (11) lesdits logements maintenant des structures en nid d'abeilles, les nervures radiales extérieures (431, 432) sont disposées de part et d'autre des a lésages (11) et coopèrent avec les inserts (10) pour les maintenir en position.

13. Anneau selon la revendication 12, caractérisé en ce que les inserts (10) sont formés d'un corps parallélépipédique (45), traversé axialement par un alésage (46), dont la face intérieure coopérant avec la face extérieure de la structure annulaire (9) présente une protubérance coaxiale (47) susceptible de coopérer avec l'alésage (11) et dont deux faces latérales opposées, choisies comme faces radiales, portent des ailes courbes (48, 49) s'étendant radialement, les extrémités radiales des ailes portent des rebords (50, 51) dirigés vers l'extérieur formant avec les faces radiales du corps des rainures recevant le bobinage, les faces radiales du corps se plaçant entre et contre les nervures radiales extérieures (431, 432) de la structure annulaire (9).

14. Anneau selon la revendication 12, caractérisé en ce que les inserts (10) sont formés d'un corps parallélépipédique (45) traversé axialement par un alésage (46) dont la face intérieure plane (52) présente une protubérance coaxiale (47), la face intérieure plane coopérant avec une face extérieure correspondante d'une pièce intermédiaire (55) présentant selon son axe de symétrie perpendiculaire un embrèvement (56) formant un bossage annulaire dirigé vers l'intérieur susceptible de s'emboîter dans l'alésage (11), la face intérieure de ladite pièce présentant une surface courbe de rayon de courbure sensiblement égal à celui de la face extérieure de la structure annulaire (9) avec laquelle elle coopère.

15. Anneau selon la revendication 14, caractérisé en ce que la pièce intermédiaire (55) portent deux rebords radiaux (53, 54) dirigés vers l'extérieur, lesdits rebords étant prévus pour enserrer les faces radiales du corps de l'insert et pour s'appuyer contre les nervures radiales extérieures (431, 432) de la structure (9).

16. Anneau selon la revendication 2, dans lequel les pieds de pales comportent un alésage radial correspondant à une ouverture prévue dans l'arbre de turbine par laquelle passe un arbre de commande du pas, caractérisé en ce qu'il comporte un limiteur d'amplitude (37) constitué par l'extrémité (37a, 66) du canon (19, 67) des inserts (10) et par au mois un bossage (36, 72), l'extrémité du canon et le bossage étant séparé dans les conditions normales de fonctionnement de l'anneau porte-pales.

17. Anneau selon la revendication 16, caractérisé en ce que l'extrémité du canon est formée d'au moins une patte (37a) susceptible de coopérer avec un bossage annulaire formant collet (36) entourant l'ouverture (35) prévue dans l'arbre de turbine, l'extrémité de la patte étant séparée du bord (37b) du collet dans les conditions normales de fonctionnement de l'anneau porte-pales.

18. Anneau selon la revendication 16, caractérisé en ce que l'extrémité (66) du canon (67) est pourvu d'un bouchon (69) portant un alésage central (70) et deux languettes (71) diamétrales et en ce que l'arbre de turbine (17) présente dans un plan radial correspondant au plan de symétrie longitudinale des languettes, au moins un bossage (72) circonférentiel contre lequel les languettes sont susceptibles de s'appuyer.

## Patentansprüche

1. Schaufelträgerring für eine Propellerbeschaufelung großer Abmessung, der von der Turbine angetrieben wird und an seiner Peripherie radiale Bohrungen aufweist, in denen die Schaufelfüße gehalten sind, gekennzeichnet durch eine ringförmige Verbundstruktur (9), in der die radialen Bohrungen (11) ausgebildet sind,

— metallische Einsätze (10), die zumindest teilweise in den Bohrungen (11) aufgenommen sind und die zumindest einen Teil der Elemente einer Haltevorrichtung für die Schaufelfüße (12) tragen, und wenigstens einen umlaufenden Fixierungsgürtel (13, 14), der die Einsätze (10) in den Bohrungen (11) hält.

2. Ring nach Anspruch 1, dadurch gekennzeichnet, daß die metallischen Einsätze (10), von oben betrachtet, eine rechteckige Form haben, daß jeder Einsatz auf seiner nach innen weisenden Seite (18) eine entlang seiner Symmetrieachse verlaufende Hülse (19)) trägt, in der eine koaxiale Bohrung (20) vorgesehen ist, die an der nach außen weisenden Seite (21) des Einsatzes mündet die Hülse in den Bohrungen (11) der ringförmigen Struktur (9) aufgenommen werden kann, und daß die nach außen weisende Seite (21) des Einsatzes in der Nähe ihrer parallelen radialen Ränder (22, 23) Nuten (24, 25) mit konvexem Boden besitzt, in denen die Fixierungsmittel (13, 14) aufgenommen sind, die die Einsätze (10) gegen die konvexe Außenseite (26) der ringförmigen Struktur (9) halten.

3. Ring nach Anspruch 2, dadurch gekennzeichnet, daß der Fixierungsgürtel (13, 14) der Einsätze aus umlaufenden Bewicklungen aus Faserfäden gebildet ist, die in allen Nuten (24, 25) der Einsätze mit konvexem Boden verlaufen.

4. Ring nach Anspruch 3, dadurch gekennzeichnet, daß ein und derselbe Faden einer Bewicklung (13 oder 14) in den Nuten (24 oder 25) der aufeinanderfolgenden Einsätze (I1, I2, I3...) verläuft.

5. Ring nach Anspruch 3, dadurch gekennzeichnet, daß ein und derselbe Faden einer Bewicklung (13 oder 14) in den Nuten (24 oder 25) jedes zweiten Einsatzes (I1, I3, I5...) verläuft und daß die Nuten der bei dem ersten Umlauf ausgelassenen Einsätze (I2, I4, I6...) bei dem zweiten Umlauf benutzt werden.

6. Ring nach Anspruch 2, dadurch gekennzeichnet, daß die ringförmige Struktur (9) aus einem zylindrischen Behälter (57) besteht, der aus zwei eine wabenförmige Zellstruktur umgreifenden Reifen (59, 60) aus Verbundwerkstoff gebildet ist, in denen die Bohrung (11) zur Aufnahme der Einsätze (10) vorgesehen ist, und daß der Behälter an seiner Außenseite Ringe (61, 62) mit U-förmigem Querschnitt besitzt, deren Kern aus einer wabenförmigen Zellstruktur besteht.

7. Ring nach Anspruch 6, dadurch gekennzeichnet, daß die Achsen der Zellen der Zellstruktur des Behälters und der Ringe gekreuzt sind, um die Steifigkeit der ringförmigen Struktur längs der Achsen dieser Zellen zu erhöhen.

8. Ring nach Anspruch 2, dadurch gekennzeichnet, daß die ringförmige Struktur (9) aus einem Kern (15) aus einem zellenartigen Material besteht, der von einer Haut aus Verbundwerkstoff umgeben ist, wobei der die Bohrungen tragende Teil gegebenenfalls aus einem massiven Verbundwerkstoff besteht.

9. Ring nach Anspruch 2, dadurch gekennzeichnet, daß die metallischen Einsätze (10) an ihren radialen Rändern (22, 23) nach innen weisende Randleisten (27, 28) haben, die sich zur Bildung einer Positionierungseinrichtung gegen die radialen Ränder der ringförmigen Struktur (9) legen können.

10. Ring nach Anspruch 2, dadurch gekennzeichnet, daß die Hülsen (19) der Einsätze (10), Haltemittel (29), für die Schaufelfüße aufweisen, die aus einer Vertiefung, in der an dem Schaufelfuß montiertes Drucklager aufgenommen ist, sowie aus einer in der Nähe des äußeren Randes der Bohrung (20) vorgesehenen Kehle (31) bestehen, in der ringförmige Segmente (30) aufgenommen sind, die das Drucklager in der Vertiefung halten und die von einer Hohlschraube (32) in ihrer Position gehalten werden.

11. Ring nach Anspruch 2, dadurch gekennzeichnet, daß der Einsatz (10) Einsatz-Haltemittel (38) aufweist, die aus einem in Sektoren unterteilten Steg mit L-förmigem Querschnitt bestehen, dessen radialer Teil (39) mit einer in der Außenfläche des ringförmigen Endbereichs der Hülse (19) vorgesehenen Kehle (40) zusammenwirkt, und dessen axialer Teil (41) gegen den Rand der in der ringförmigen Struktur (9) vorgesehenen Bohrung (11) anschlägt, wobei der in Sektoren unterteilte Steg seinerseits von einem Haltering (42) gehalten ist.

12. Ring nach Anspruch 1, dadurch gekennzeichnet, daß die ringförmige Struktur (9) auf den Innen- und Außenseiten (42, 43) innere und äußere radiale Rippen (420, 424 bzw. 431, 432) besitzt, daß eine im stromabwärtigen Endbereich gelegene innere Rippe (420) einen Flansch bildet, der mit einem korrespondierenden Flansch (44) der Turbine zusammenwirkt, daß die anderen inneren Rippen (421, 422, 423, 424) ringförmige Aufnahmen bilden, die zu beiden Seiten einer zentralen ringförmigen Zone angeordnet sind, in der die Bohrungen (11) vorgesehen sind, daß die genannten Aufnahmen wabenförmige Strukturen enthalten und daß die äußeren Rippen (431, 432) zu beiden Seiten der Bohrungen (11) angeordnet sind und mit den Einsätzen (10) zusammenwirken, um diese in ihrer Position zu halten.

13. Ring nach Anspruch 12, dadurch gekennzeichnet, daß die Einsätze (10) aus einem quaderförmigen Körper (45) gebildet sind, der in axialer Richtung von einer Bohrung (46) durchdrungen wird und dessen mit der Außenseite der ringförmigen Struktur (9) zusammenwirkende Innenseite einen koaxialen Wulst (47) aufweist, der mit der Bohrung (11) zusammenwirken kann, und daß zwei als radiale Seiten ausgewählte entgegengesetzte Seitenflächen des Körpers in radialer Richtung verlaufende gekrümmte Rippen (48, 49) tragen, die an ihren radialen Endbereichen nach außen gerichtete Randleisten (5) tragen, die zusammen mit den radialen Seiten des Körpers Nuten zu Aufnahme der genannten Bewicklung bilden, wobei die radialen Seiten des Körpers sich zwischen und gegen die äußeren radialen Rippen (431, 432) der ringförmigen Struktur (9) legen.

14. Ring nach Anspruch 12, dadurch gekennzeichnet, daß die Einsätze (10) aus einem quaderförmigen Körper (45) gebildet sind, der in axialer Richtung von einer Bohrung (46) durchdrungen wird und dessen ebene Innenseite (52) einen koaxialen Wulst (47) aufweist und mit einer korrespondierenden Seite eines Zwischenstücks zusammenwirkt, das in Richtung seiner senkrechten Symmetrieachse eine Prägung (56) besitzt, die einen nach innen weisenden ringförmigen Vorsprung bildet, der sich in die Bohrung (11) einfügen kann, und daß die Innenseite des Zwischenstücks eine gekrümmte Fläche aufweist, deren Krümmungsradius annähernd demjenigen der Außenseite der ringförmigen Struktur (9) entspricht mit der sie zusammenwirkt.

15. Ring nach Anspruch 4, dadurch gekennzeichnet, daß das Zwischenstück (55) zwei nach außen gerichtete radiale Randleisten (53, 54) trägt, die die radialen Seiten des Körpers des Einsatzes umspannen und sich gegen die radial äußeren Rippen (431, 432) der Struktur (9) abstützen.

16. Ring nach Anspruch 2, bei dem die Schaufelfüße eine mit einer in der Turbinenwelle vorgesehenen Öffnung korrespondierende radiale Bohrung besitzen, durch die eine Welle für die Steuerung der Propellersteigung verläuft, dadurch gekennzeichnet daß ein Amplitudenbegrenzer (37) vorgesehen ist, der von dem Endbereich der Hülse (19, 67) der Einsätze (10) und wenigstens einem Vorsprung (36, 72) gebildet ist, wobei der Endbereich der Hülse und der Vorsprung in den normalen Betriebszuständen des Schaufelträgerrings voneinander getrennt sind.

17. Ring nach Anspruch 16, dadurch gekennzeichnet, daß der Endbereich der Hülse aus wenigstens einer Klaue (77a) besteht, die mit einem einen Bund (36) bildenden ringförmigen Vorsprung zusammenwirken kann, der eine in der Turbinenwelle vorgesehene Öffnung (35) umgibt, wobei das Ende der Klaue in den normalen Betriebszuständen des Schaufelträgerrings von dem Rand (37b) des Bundes getrennt ist.

18. Ring nach Anspruch 16, dadurch gekennzeichnet, daß der Endbereich (66) der Hülse (67) mit einem Pfropfen (69) versehen ist, der eine zentrale Öffnung (70) besitzt und zwei Zungen (71) trägt, und daß die Turbinenwelle (17) in einer Radialebene, die der Symmetrieebene der Zungen entspricht, wenigstens eine umlaufende Erhebung (72) aufweist, gegen die die Zungen sich abstützen können.

## Claims

1. Blade-carrier ring for propeller blading of large dimension, wherein the ring is entrained by the turbine and has on its periphery radial bores in which the blade roots are held, characterized in that it comprises:
- an annular structure (9) of composite material in which the radial bores (11) are provided;
- metal inserts (10), at least partly housed in the bores (11), the inserts bearing at least a portion of the members of a device (12) for retaining the blade roots (12);
- at least one peripheral securing belt (13, 14) holding the inserts (10) in the bores (11).

2. Ring as claimed in claim 1, characterized in that the metal inserts (10) have, when seen in plan view, a rectangular shape, the inwardly directed surface (18) of the insert bears, along its vertical axis of symmetry, a barrel (19) in which there is provided a coaxial bore (20) communicating with the outwardly directed surface (21), wherein the barrel may be housed in the bores (11) of the annular structure (9), and the outer surface (21) is provided, close to its parallel radial edges (22, 23), with grooves having convex bases (24, 25) which house the fastening means (13, 14) holding the inserts (10) against the convex outer surface (26) of the annular structure (9).

3. Ring as claimed in claim 2, characterized in that the securing belt (13, 14) for the inserts is formed by peripheral windings of fibre yarns passing into each of the grooves having convex bases (24, 25) of the inserts.

4. Ring as claimed in claim 3, characterized in that the same yarn of a winding (13 or 14) passes into the grooves (24 or 25) of the successive inserts (I1, I2, I3, etc.).

5. Ring as claimed in claim 3, characterized in that the same yarn of a winding (13 or 14) passes into the grooves (24 or 25) of one out of two inserts (I1, I3, I5), the grooves of the inserts (I2, I4, I6) not used during the first passage being used during the second passage.

6. Ring as claimed in claim 2, characterized in that the annular structure (9) is formed by a cylindrical casing (57) formed by two shells (59, 60) of composite material retaining an alveolar honeycombed structure (58) in which the bores (11) receiving the inserts (10) are provided, the casing having on its outer face rings (61, 62) of U-shaped section whose web is formed by an alveolar honeycombed structure (63).

7. Ring as claimed in claim 6, characterized in that the axes of the cells of the alveolar structures of the casing and the rings intersect so as to increase the rigidity of the annular structure along the axes of the cells.

8. Ring as claimed in claim 2, characterized in that the annular structure (9) is formed by a web (15) of cellular material surrounded by a skin of composite material, the portion bearing the bores possibly being of a solid composite material.

9. Ring as claimed in claim 2, characterized in that the metal inserts (10) are provided on their radial edges (22, 23) with inwardly directed rims (27, 28) which can be positioned against the radial edges of the annular structure (9) to form a positioning device.

10. Ring as claimed in claim 2, characterized in that the barrels (19) of the inserts (10) comprise retaining means (29) for the blade roots formed by a recess in which there is housed a thrust bearing mounted on the blade root and a groove (31) provided in the vicinity of the outer edge of the bore (20) receiving the annular segments (30) which maintains the thrust bearing in the recess, the segments being locked in position by a hollow screw (32).

11. Ring as claimed in claim 2, characterized in that the insert (10) comprises insert retaining means (38) formed by a sectored brace with an L-shaped cross-section whose radial portion (39) cooperates with a groove (40) provided on the outer surface of the annular end of the barrel (19) of the insert and whose axial portion (41) abuts against the edge of the bore (11) provided in the annular structure (9), the sectored brace being held by a retaining ring (42).

12. Ring as claimed in claim 1, characterized in that the annular structure (9) comprises, on its inner and outer surfaces (42, 43), radial inner (420, 424) and outer (431, 432) ribs, an inner rib (420) at the downstream end forms a flange cooperating with a corresponding flange (44) of the turbine, the inner ribs (421, 422; 423, 424) form annular housings disposed on both sides of a central annular zone in which the bores (11) are provided, which housings retain honeycombed structures, and the outer radial ribs (431, 432) are disposed on both sides of the bores (11) and cooperate with the inserts (10) to hold them in position.

13. Ring as claimed in claim 12, characterized in that the inserts (10) are formed by a parallelepipedic body (45) traversed axially by a bore (46) whose inner surface cooperating with the outer surface of the annular structure (9) has a coaxial projection (47) able to cooperate with the bore (11) and two of whose lateral opposite surfaces, selected as radial surfaces, bear radially extending curved flanges (48, 49), the radial ends of the flanges bear outwardly directed rims (50, 51) forming, together with the radial surfaces of the body, grooves receiving the winding, the radial surfaces of the body being placed between and against the outer radial ribs (431, 432) of the annular structure (9).

14. Ring as claimed in claim 12, characterized in that the inserts (10) are formed by a parallelepipidic body (45) traversed axially by a bore (46) whose plane inner surface (52) has a coacial projection (47), the plane inner surface cooperating with a corresponding outer surface of an intermediate component (55) having, along its perpendicular axis of symmetry, a shoulder (56) forming an inwardly directed annular projection which can be inserted in the bore (11), the inner surface of the component having a curved surface whose radius of curvature is substantially equivalent to that of the outer surface of the annular structure (9) with which it cooperates.

15. Ring as claimed in claim 14, characterized in that the intermediate component (55) bears two outwardly directed radial rims (53, 54) provided to clamp the radial surfaces of the body of the insert and to bear against the outer radial ribs (431, 432) of the structure (9).

16. Ring as claimed in claim 2, in which the blade roots comprise a radial bore corresponding to an opening provided in the turbine shaft through which there passes a pitch control shaft, characterized in that it comprises an amplitude limiter (37) formed by the end (37a, 66) of the barrel (19, 67) of the inserts (10) and by at least one projection (36, 72), the end of the barrel and the projection being separated in the normal operating conditions of the blade-carrier ring.

17. Ring as claimed in claim 16, characterized in that the end of the barrel is formed by at least one lug (37a) able to cooperate with an annular projection forming a collar (36) surrounding the opening (35) provided in the turbine shaft, the end of the lug being separated from the edge (37b) of the collar in the normal operating conditions of the blade-carrier ring.

18. Ring as claimed in claim 16, characterized in that the end (66) of the barrel (67) is provided with a stopper (69) having a central bore (70) and two diametrical tongues (71) and in that the turbine shaft (17) has, in a radial plane corresponding to the longitudinal plane of symmetry of the tongues, at least one peripheral bore (72) against which the tongues can bear.

FIG.:1

FIG.:2

FIG.: 3

10

22

23

13

14

24

25

12

EP 0 267 097 B1

FIG. 4

EP 0 267 097 B1

FIG.:5

FIG.:6

FIG.:7

FIG.: 8B

FIG.: 8A

FIG.: 9

FIG.: 10

EP 0 267 097 B1

FIG.:11

FIG.:12

FIG.:13

FIG.:14

FIG.:15

FIG.:16